# EUROPEAN PATENT SPECIFICATION

(11) **EP 0 771 954 B1**
(45) Date of publication and mention of the grant of the patent: **03.05.2000**
(21) Application number: 96117228.5
(22) Date of filing: 26.10.1996
(51) Int. Cl.: F16B 7/14

(54) **Device for mutual locking of telescopic tube sections**
Vorrichtung zum Verriegeln von teleskopartigen Rohrabschnitten gegeneinander
Dispositif pour le blocage mutuel des sections de tuyaux téléscopiques

(30) Priority: 31.10.1995 IT BO950154 U
(43) Date of publication of application: 07.05.1997
(73) Proprietor: Patelli, Quinto, 40054 Budrio, Bologna (IT); Patelli, Giuseppe, 40138 Bologna (IT)
(72) Inventor: Patelli, Quinto, 40054 Budrio, Bologna (IT); Patelli, Giuseppe, 40138 Bologna (IT)
(74) Representative: Gustorf, Gerhard, Dipl.-Ing.

(56) References cited:
- DE-B- 1 018 807
- GB-A- 1 085 062

## Description

The present invention is related to a device actuated and maintained by axial pressure for mutually locking sections of a telescopic tube, in particular for making handles for floor brushes and the like.

The use of telescopic tubes to make handles for various types of implement is known, in particular for cleaning implements, such as brooms, brushes and the like.

In these applications, the sections constituting the telescopic tube are normally capable of being mutually locked at any point along their relative mutual extent by variously designed devices which usually involve pressure of the internal structure against the external structure and expansion plug means, or of the external structure around the internal structure with ferrule means, while these means of friction are nevertheless actuated through mutual rotation of the sections of tube or of means associated with them.

Such retention devices according to the known art have limitations and drawbacks when the handle which they equip is associated with implements to be used by exerting relatively great axial pressure, combined with torsion, on the handle itself, in particular in floor brushes to be used with wet clothes for cleaning floors, because the forces applied by the user on the handle are capable of deactuating the retention devices and of mutually disconnecting the sections of telescopic tube.

A retention device having the features of the pre-characterising part of claim 1 is disclosed in DE-B-1 018 807.

The main object of the present invention is therefore to eliminate these limitations and drawbacks of the devices according to the known art, in other words to provide a functional device for the mutual locking of sections of a telescopic tube at any point along their relative mutual extent and to make handles of cleaning implements in particular, so as not to suffer disconnection by the application of axial and torsional force components on the handle during use. Another aim of the present invention is to achieve the preceding object by means of a device which can be mounted by means of automatic machines on the sections of a telescopic tube which it is intended to equip, without the need for any manual actions whatsoever.

Another object of the invention is to achieve the preceding object by means of a device which can also be used in other applications.

A further object of the invention is to achieve the preceding aims by means of a simple and effective device which is safe to operate and relatively inexpensive considering the results achieved with it in practice.

These and other objects are all achieved with the device which is actuated and maintained by axial pressure for mutual locking of sections of a telescopic tube, in particular for making handles for floor brushes and the like, according to the present invention, comprising a cap-type retention pin for an expansion bush which is provided on its shell with a concial slot with offset entrance shoulders which is capable of being intercepted and penetrated by a wedge-shaped tongue which projects on a thicker proximal portion of the pin.

Further characteristics and advantages of the device according to the present invention will become clearer from the detailed description which follows of a preferred but not exclusive embodiment thereof which is illustrated purely by way of non-limiting example in the two sheets of drawings attached, in which:
Figure 1 shows a longitudinal cross-sectional view of two sections of a telescopic tube with, mounted therein, the device according to the present invention, which is also illustrated in section,
Figure 2 shows the same sectional view as in the preceding figure with components of the device according to the invention in a different mutual arrangement,
Figure 3 shows a plan view of a component of the device according to the present invention,
Figure 4 to 6 show the device according to the invention with associated components in three consecutive operational positions.

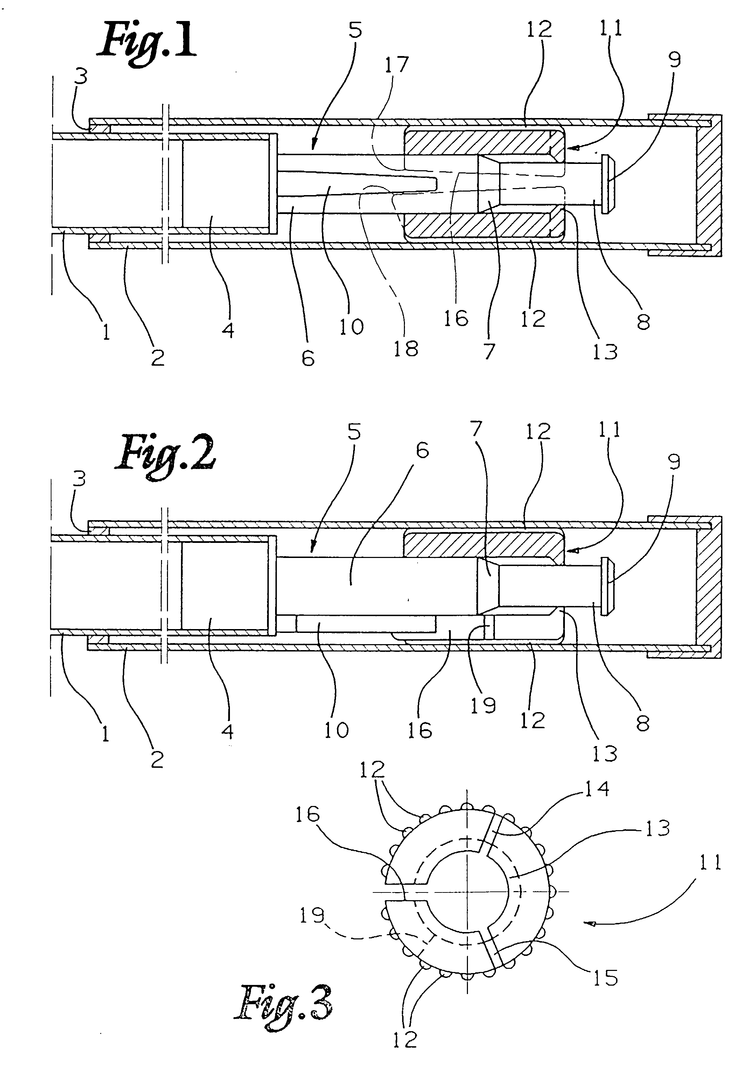

With reference to the figures, and in particular to figure 1, the numerals 1 and 2 indicate respectively an internal and an external section of a telescopic tube, which sections are illustrated inserted coaxially one inside the other with mutual dimensional play shimmed by a ring 3. Fixed in any known manner at the front of the internal length 1 is a plug 4 with which a pin, indicated as a whole by 5, is integral and is preferably made of plastic material and formed as a thicker proximal portion 6 tapering by means of a central conical portion 7 to a narrower distal portion 8 which in turn ends in a mushroom-shaped cap 9. On the shell of the thicker proximal portion 6 of the pin 5 (see also Figure 2), a tongue 10 projects axially, being formed in a wedge-shaped manner along the greater part of the axial extent of the broader proximal portion 6 itself, until it terminates almost at the rear of the central conical portion 7 of the pin 5. Inserted around the pin 5 is a cylindrical bush 11, which has axial dimensions equal to the distance between the apex of the wedge-shaped tongue 10 and the root of the mushroom-shaped cap 9, is preferably made of elastically deformable, relatively soft plastic material, and also is externally textured with a plurality of parallel axial beads 12 which are capable of coming into contact with the internal surface of the external section 2 of the tube and of increasing friction there in the manner and for the functions described below.

The bush 11 is also shaped with a neck 13 around the narrower distal portion 8 of the pin 5, in such a manner that it forms a stop under the mushroom-shaped cap 9 which therefore retains it, and is there provided (see also Figure 3) with three radially equidistant slots 14, 15 and 16, the first two of which are blind and the third is a through-slot running along the entire shell, the associated lips diverging towards the other end, as far as two entrance shoulders 17 and 18, the first flush and the second asymmetrically protruding in relation to the cylindrical shape of the bush 11 as a whole so as to form a tooth capable of interacting with the apex of the wedge-shaped tongue 10 in the manner and for the functions described below. For these functions, a transverse notch 19 is also provided along the lip of the through-slot 16 ending in the tooth.

Having thus completed the static description of a preferred exemplary embodiment of the device according to the present invention, the dynamic description thereof, in other words the functioning, follows.

Starting with assembly, for conceptual priority, it can be seen that the associated mounting on the length of tube 1 which the device is intended to equip can be carried out automatically in a known manner, while the expedient constituted by the transverse notch 19 along the through-slot 16 of the bush 11 makes it possible also to carry out automatically the axial insertion of the latter around the pin 5.

It must in fact be noted that as, for functional requirements which are better illustrated subsequently, the axial dimension of the bush 11 is equal to the distance between the apex of the wedge-shaped tongue 10 and the root of the mushroom-shaped cap 9, but with an entrance shoulder or tooth 18 which is in excess of this dimension, during automatic insertion operations, it may be necessary that the bush 11 be slipped around the pin 5 orientated so that said tooth butts against the apex of the tongue 10.

In this event, the greater axial dimension of the bush 11 at the contingent point would obstruct the associated complete insertion, if the absence of material created by the transverse notch 19 along the through-slot 16 did not permit, as it does, the axial deformation thereof, the tooth being retracted as a result of the pressure exerted by the automatic insertion device until the neck 13 falls back elastically around the narrower distal portion 8 of the pin 5 under the mushroom-shaped cap 9 and accordingly becomes captive by virtue of the latter, while the radial slots 14, 15 and 16 around the neck 13 itself are provided to favor the elastic expansion thereof necessary to pass over the mush-room cap 9 itself.

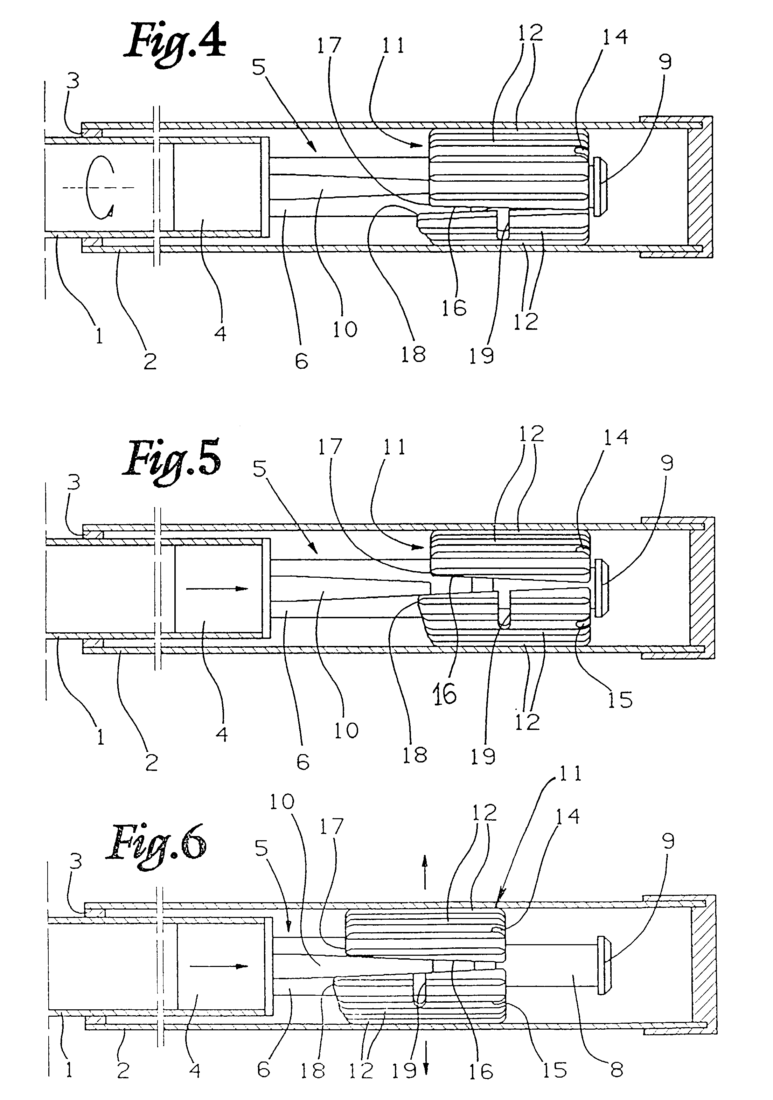

This being assumed as far as mounting is concerned, the operational phases of the device are illustrated consecutively in Figures 4, 5 and 6.

The rotation, effected by the operator in the clockwise direction, of the internal section 1 of tube in relation to the external section 2 causes the apex of the wedge-shaped tongue 10, which is integral with the pin 5, to intercept the protruding tooth or shoulder 18 of the slot 16 running along the shell of the bush 11 (see Figures 4 and 5). In this arrangement, as a result of axial thrust effected by the operator on the internal section 1 of the tube in relation to the external section 2, the wedge-shaped tongue 10 is forced to penetrate the through-slot 16 of the bush 11, giving rise to diametral expansion of the latter against the internal surface of the external section 2 of the tube (see Figure 6) and, with this, relative locking by friction. It is evident at this point that the torsional movements effected by the operator during use of the two (or more) sections 1 and 2 of tube as a handle of an implement cannot disconnect the fastening, while the axial thrusts effected by the operator during use are actually suitable for consolidating the fastening which can be released, when necessary or appropriate, simply by applying traction to the sections.

It is clear that, in alternative embodiments, the device according to the present invention can also be made differently, with mechanical equivalents and built-in expedients which nevertheless lie within the scope of the claims set out below; in particular, by way of non-absolute indication, the slot 16 of the expansion bush 11, which is intended to be intercepted and penetrated by the wedge-shaped tongue 10, could be designed as not running along the entire shell of the bush 11 itself but rather as terminated more or less at the rear of the neck 13 of the bush 11.

As is manifest from the preceding detailed description of a preferred exemplary embodiment, the device according to the present invention affords the advantages which correspond to the achieving of the predetermined objects and others still; in fact, it constitutes a functional, economic and versatile device for the mutual locking of sections of a telescopic tube at any point along their relative mutual extent to make handles of cleaning implements in particular, so as not to suffer disconnection by the application of axial and torsional force components on the handle during use, which device can also be mounted by means of automatic machines on the sections of telescopic tube which it is intended to equip, without the need for any manual actions whatsoever.

## Claims

1. Device for mutual locking of sections of a telescopic tube, in particular for making handles for cleaning implements and the like, comprising a retention pin (5) with a cap (9), the pin extending though an expansion bush (11) which is provided in its shell with a conical slot (16), characterized in that the slot has axially offset entrance shoulders (17, 18), and is capable of being intercepted and penetrated by a wedge-shaped tongue (10) which projects on a proximal portion (6) of the pin (5).

2. Device according to claim 1, characterized in that :
- the pin (5) is fixed at the front of the internal section (1) of tube and formed as a thicker proximal portion (6) tapering by means of a central conical portion (7) to a narrower distal portion (8) which in turn ends in a mushroom-shaped cap (9);
- the wedge-shaped tongue (10) is formed axially on the shell of said thicker proximal portion (6);
- the bush (11) is cylindrical and formed with a neck (13) around said narrower distal portion (8) of said pin (5) so as to form a stop under said cap (9);
- the slot (16) extends along the entire shell of said bush (11) with lips diverging on the side opposite said neck (13) as far as two entrance shoulders (17, 18), one of which is asymmetrically protruding in relation to the cylindrical shape of said bush (11) as a whole to form a tooth capable of interacting with the apex of said wedge-shaped tongue (10).

3. Device according to claim 1 or 2, characterized in that said bush (11) arranged around said pin (5) has an axial dimension equal to the distance between the apex of said wedge-shaped tongue (10) and the root of said cap (9).

4. Device according to anyone of the preceding claims, characterized in that said slot (16) which is made in the shell of said bush (11) and is capable of interacting with the apex of said wedge-shaped tongue (10) is formed only on part of the shell of the bush (11).

5. Device according to anyone of the preceding claims, characterized in that said neck (13) of said bush (11) is provided with slots (14, 15) which are capable of favoring its elastic deformation.

6. Device according to anyone of the preceding claims, characterized in that said bush (11) is externally textured with a plurality of parallel axial beads (12) which are capable of coming into contact with the internal surface of the external section (2) of tube and of increasing friction there.

7. Device according to anyone of the preceding claims, characterized in that said bush (11) is made of elastically deformable, relatively soft synthetic material.

8. Device according to anyone of the preceding claims, characterized in that at least one transverse notch (19) is made along the lip of said slot (16) ending in said tooth.

## Patentansprüche

1. Vorrichtung zur gegenseitigen Verriegelung von Abschnitten eines teleskopischen Rohres, insbesondere zur Verwendung für Stiele von Reinigungsgeräten oder dergleichen, das einen Aufnahmezapfen (5) mit einem Kopf (9) aufweist, wobei der Zapfen durch eine Spreizhülse (11) hindurchtritt, die an ihrem Mantel einen konischen Schlitz (16) hat, dadurch gekennzeichnet, daß der Schlitz (16) axial gegeneinander versetzte Eintrittsschultern (17, 18) aufweist und dazu dient, eine in diesen eindringende, konische Zunge (10) aufzunehmen, die von einem proximalen Bereich (6) des Zapfens (5) absteht.

2. Vorrichtung nach Anspruch 1, dadurch gekennzeichnet, daß
- der Zapfen (5) an der Stirnseite des inneren Abschnittes (1) des Rohres angebracht ist und einen proximal dickeren Bereich (6) hat, der über einen konischen Mittelteil (7) in einen distalen, dünneren Bereich (8) übergeht, dessen Ende als pilzförmiger Kopf (9) ausgebildet ist,
- die konische Zunge (10) sich auf der Mantelfläche des proximalen, dickeren Bereiches (6) in axialer Richtung erstreckt,
- die Spreizhülse (11) zylindrisch ausgebildet ist und einen Kragen (13) hat, der den distalen, dünneren Bereich (8) des Zapfens (5) umgreift und dadurch einen Anschlag gegen den Kopf (9) bildet,
- der Schlitz (16) sich über die gesamte Länge des Mantels der Spreizhülse (11) erstreckt, wobei die Ränder des Schlitzes vom Kragen (13) ausgehend bis zu den beiden Eintrittsschultern (17, 18) divergieren, von denen eine asymmetrisch über die Zylinderform der Hülse (11) vorragt und eine Nase bildet, mit der die Spitze der konischen Zunge (10) zusammenwirkt.

3. Vorrichtung nach Anspruch 1 oder 2, dadurch gekennzeichnet, daß die den Zapfen (5) umschließende Spreizhülse (11) eine axiale Länge hat, die gleich dem Abstand zwischen der Spitze der konischen Zunge (10) und der Wurzel des pilzförmigen Kopfes (9) ist.

4. Vorrichtung nach einem der vorhergehenden Ansprüche, dadurch gekennzeichnet, daß der Schlitz (16), der in den Mantel der Spreizhülse (11) eingearbeitet ist und mit der Spitze der konischen Zunge (10) zusammenwirkt, nur in einen Teil des Mantels der Spreizhülse (11) eingearbeitet ist.

5. Vorrichtung nach einem der vorhergehenden Ansprüche, dadurch gekennzeichnet, daß der Kragen (13) der Spreizhülse (11) Schlitze (14, 15) aufweist, die dessen elastische Verformung begünstigen.

6. Vorrichtung nach einem der vorhergehenden Ansprüche, dadurch gekennzeichnet, daß die Spreizhülse (11) an ihrer Außenseite eine Struktur mit einer Vielzahl paralleler, axialer Sicken (12) aufweist, die mit der Innenfläche des äußeren Abschnittes (2) des Rohres in Berührung kommen und dadurch den Reibkontakt erhöhen.

7. Vorrichtung nach einem der vorhergehenden Ansprüche, dadurch gekennzeichnet, daß die Spreizhülse (11) aus elastisch verformbarem, verhältnismäßig weichem Kunststoff besteht.

8. Vorrichtung nach einem der vorhergehenden Ansprüche, dadurch gekennzeichnet, daß in den in der Nase endenden Rand des Schlitzes (16) wenigstens ein in Querrichtung verlaufender Einschitt (19) eingearbeitet ist.

## Revendications

1. Dispositif pour le blocage mutuel des sections d'un tube téléscopique, particulièrement pour l'utilisation comme manche d'outils de nettoyage et similaires, comprenant un tourillon de réception (5) avec une tête (9) lequel pénètre dans une douille extensible (11) dont la chemise présente une fente conique (16), caractérisé par le fait que la fente (16) présente des épaules d'entrée (17, 18) axialement décalées l'une par rapport à l'autre et que la fente (16) est apte à être saisie et pénétrée par une languette conique (10) en saillie sur un segment proximal (6) du tourillon (5).

2. Dispositif selon la revendication 1, caractérisé par les faits que
- le tourillon (5) est fixé à l'extrémité frontale de la section interne (1) du tube et est composé d'un segment proximal (6) plus épais raccordé, à travers un segment central conique (7), à un segment distal (8) plus mince se terminant par une tête (9) en forme de champignon,
- la languette conique (10) s'étend dans le sens axial sur la surface du segment proximal (6) plus épais,
- la douille (11) de forme cylindrique présente un collet (13) entourant le segment distal (8) plus mince dudit tourillon (5) pour former un arrêt contre la tête (9),
- la fente (16) s'étend le long de toute la chemise de la douille (11) et présente des bords divergents à partir du collet (13) jusqu'aux épaules d'entrée (17, 18), l'une des deux étant en saillie asymmétrique sur la forme cylindrique de la douille (11) pour former un talon qui agit en coopération avec l'extrémité de la languette conique (10).

3. Dispositif selon la revendication 1 on 2, caractérisé par le fait que la douille (11) entourant le tourillon (5) présente une longueur axiale égale à la distance entre l'extrémité de la languette conique (10) et le pied de la tête en forme de champignon (9).

4. Dispositif selon une quelconque des revendications précédentes, caractérisé par le fait que la fente (16) formée dans la chemise de la douille extensible (11) et coopérant avec l'extrémité de la languette conique (10) est pratiquée dans une seule partie de la chemise de la douille (11).

5. Dispositif selon une quelconque des revendications précédentes, caractérisé par le fait que le collet (13) de la douille (11) présente des fentes (14, 15) pour favoriser sa déformation élastique.

6. Dispositif selon une quelconque des revendications précédentes, caractérisé par le fait que la douille (11) présente une surface extérieure structurée avec une multiplicité de rainures axiales et parallèles (12) qui viennent en contact avec la surface intérieure de la section externe (2) du tube pour augmenter l'effet du contact à friction.

7. Dispositif selon une quelconque des revendications précédentes, caractérisé par le fait que la douille extensible (11) est fabriquée dans une matière synthétique relativement molle et élastiquement déformable.

8. Dispositif selon une quelconque des revendications précédentes, caractérisé par le fait que dans le bord de la fente (16) qui se termine dans le talon présente au moins une coupure transversale (19).
